# FASCICULE DE BREVET EUROPEEN

(11) **EP 2 697 928 B1**
(45) Date de publication et mention de la délivrance du brevet: **05.05.2021**
(21) Numéro de dépôt: 12713731.3
(22) Date de dépôt: 11.04.2012
(51) Int. Cl.: H04L 9/00, G09C 1/10, H04L 9/08

(54) **EQUIPEMENT CRYPTOGRAPHIQUE METTANT EN OEUVRE LES MODES ROUGES ET NOIR DE COMMUNICATION**
KRYPTOGRAFISCHE EINRICHTUNG FÜR ROTEN UND SCHWARZEN KOMMUNIKATIONSMODUS
CRYPTOGRAPHICAL EQUIPMENT IMPLEMENTING RED AND BLACK COMMUNICATION MODES

(30) Priorité: 11.04.2011 FR 1101105
(43) Date de publication de la demande: 19.02.2014
(73) Titulaire: THALES, 92200 Neuilly sur Seine (FR)
(72) Inventeur: BINESSE, Dominique, F-49309 Cholet (FR); DUPUTZ, Patrick, F-92622 GENNEVILLIERS CEDEX (FR); MACE, Gaël, F-49309 Cholet (FR); MAILLARD, Romaric, F-49309 Cholet (FR)
(74) Mandataire: Lavoix
(86) Numéro de dépôt international: PCT/EP2012/056571
(87) Numéro de publication internationale: WO 2012/140077

(56) Documents cités:
- EP-A1- 0 929 886
- FR-A1- 2 901 939
- US-A- 5 995 628
- US-A1- 2002 014 962
- DEPARTMENT OF THE ARMY: "Tactics, Techniques, and Procedures (TTPs)for the Joint Network Node-Network (JNN-N)", FIELD MANUAL INTERIM,, no. FMI 6-02.60, 5 septembre 2008 (2008-09-05), pages 1-145, XP007920197,

## Description

La présente invention concerne un équipement cryptographique comprenant :
- une interface d'entrée, permettant d'interagir avec l'équipement cryptographique et d'échanger des informations sensibles ou non-sensibles de manière séquentielle,
- un module rouge, destiné à traiter des informations sensibles,
- un module cryptographique, relié au module rouge par un premier lien interne amont et propre à appliquer des fonctions cryptographiques,
- un module noir, relié au module cryptographique par un premier lien interne aval et propre à traiter des informations non-sensibles, et
- une interface de sortie, reliée au module noir par un premier lien d'interface et destinée à gérer l'échange d'informations depuis l'équipement cryptographique.

Elle se situe dans le domaine de la sécurité des systèmes d'informations.

Elle concerne la conception d'équipements de sécurité et, plus particulièrement, la conception des équipements cryptographiques, comme les postes de radio tactique, traitant d'informations sensibles.

Les équipements cryptographiques ont une architecture comprenant généralement un domaine hôte rouge et un domaine hôte noir séparés physiquement par un domaine cryptographique. Le domaine hôte rouge traite des informations sensibles en clair. Le domaine hôte noir traite des informations non-sensibles, dont la divulgation n'entraîne pas de compromission de la sécurité du système d'information. Ces informations non-sensibles sont soit des informations en clair, intrinsèquement non-sensibles, soit des informations chiffrées, intrinsèquement sensibles mais désensibilisées par chiffrement.

Le domaine cryptographique comporte un bloc cryptographique doté de fonctions cryptographiques nécessaires à une protection/dé-protection des informations sensibles se plaçant en coupure des domaines hôtes rouge et noir. Les équipements cryptographiques comprennent également deux interfaces externes : une première interface ou interface utilisateur, reliée au domaine hôte rouge, et une seconde interface ou interface externe, reliée au domaine hôte noir.

L'équipement cryptographique comprend un mode « chiffre » propre au traitement des informations sensibles. Dans le mode « chiffre » :
- les informations sensibles, entrant sur l'interface utilisateur, sont chiffrées par le domaine cryptographique et sortent sécurisées sur l'interface externe du domaine noir.
- les informations entrant sur l'interface externe sont déchiffrées par le domaine cryptographique et sortent, à l'état clair, sur l'interface utilisateur du domaine rouge.

En plus du mode « chiffre », certains équipements cryptographiques possèdent un mode « clair » qui permet de traiter des informations non sensibles.

Ainsi, le mode «chiffre» permet de sécuriser les informations sensibles en faisant appel aux fonctions cryptographiques du domaine cryptographique, le mode «clair» ne faisant pas appel aux fonctions cryptographiques pour la transmission des informations.

Les implémentations connues s'appuient sur la mise en place au sein des équipements cryptographiques d'un canal de transmission en clair entre le domaine hôte rouge et le domaine hôte noir permettant de ne pas appliquer de protection cryptographique et permettant l'échange d'informations en clair entre les deux domaines. Plus précisément, le canal de transmission en clair relie directement le domaine hôte rouge et le domaine hôte noir en traversant le bloc cryptographique du domaine cryptographique sans passer par les fonctions cryptographiques du bloc cryptographique.

Or, la mise en oeuvre du mode «clair» au sein d'un équipement cryptographique engendre un risque de sécurité majeur pour la confidentialité des informations sensibles de l'utilisateur.

En effet, l'activation intempestive du mode «clair», par exemple par une action involontaire de l'utilisateur ou une défaillance de l'équipement cryptographique, est propre à entraîner une divulgation des informations sensibles de l'utilisateur, comme une transmission en clair d'informations sensibles, et/ou une indisponibilité des applications sensibles de l'utilisateur, correspondant à une interruption de services de sécurité offerts par l'équipement.

D'autre part, ce type d'équipement est utilisé dans les domaines aéronautiques et tactiques qui nécessitent une disponibilité importante du mode «clair» qui correspond généralement à une fonction de secours de l'équipement cryptographique.

Les documents US 5 995 628 et FR 2 901 939 décrivent des exemples d'équipements cryptographiques.

Le but de l'invention est donc de proposer une nouvelle architecture de l'équipement cryptographique, permettant la mise en oeuvre du mode «clair» en toute circonstance, sans remettre en cause la sécurité globale de l'équipement et sans affecter la disponibilité de l'équipement et des applications associées.

A cet effet, l'invention a pour objet un équipement cryptographique du type précité, caractérisé en ce que le module cryptographique comporte :
- un bloc cryptographique interagissant d'une part avec le module rouge au travers du premier lien interne amont, et d'autre part avec le module noir au travers du premier lien interne aval et propre à traiter les informations sensibles à l'aide des fonctions cryptographiques, et
- un dispositif de gestion, interagissant avec l'interface d'entrée au travers d'au moins un second lien d'interface et avec soit le module rouge au travers d'un second lien interne amont, soit le module noir au travers d'un second lien interne aval à l'exclusion des deux simultanément, et propre à aiguiller les informations sensibles entre l'interface d'entrée et le second lien interne amont, ou les informations non-sensibles entre l'interface d'entrée et le second lien interne aval, sans que les informations non-sensibles ne transitent par le module rouge,
et en ce que le bloc cryptographique et le dispositif de gestion sont physiquement et logiquement distincts l'un de l'autre et autonomes, et disposent de moyen de protection identiques, propres à protéger en intégrité le dispositif de gestion afin de détecter toute tentative d'altération.

Suivant d'autres modes de réalisation, l'équipement cryptographique comprend une ou plusieurs des caractéristiques suivantes, prises isolément ou suivant toutes les combinaisons techniquement possibles :
- le bloc cryptographique et le dispositif de gestion ont des ressources matérielles propres ;
- le dispositif de gestion comprend :
   - un dispositif d'aiguillage connecté à la fois au second lien interne amont, au second lien interne aval et à au moins un second lien d'interface, le dispositif d'aiguillage étant destiné à relier l'interface d'entrée soit au module rouge, soit au module noir, à l'exclusion des deux simultanément, et
   - un moyen de contrôle du dispositif d'aiguillage connecté à la fois :
      - au dispositif d'aiguillage afin de commander la liaison à réaliser, et
      - à l'interface d'entrée, afin d'une part de recevoir une consigne de sélection de la liaison à réaliser suivant un mode de fonctionnement choisi et, d'autre part, d'informer l'utilisateur du mode de fonctionnement courant ;
- l'interface d'entrée comprend:
   - une interface physique externe reliée au dispositif d'aiguillage et destinée à transmettre les informations sensibles ou non-sensibles vers l'équipement cryptographique et à recevoir les informations sensibles ou non-sensibles de l'équipement cryptographique,
   - un indicateur relié au moyen de contrôle du dispositif d'aiguillage et destiné à indiquer le mode de fonctionnement courant, et
   - un moyen de sélection relié au moyen de contrôle du dispositif d'aiguillage et destiné à fournir la consigne de sélection du mode de fonctionnement choisi ;
- l'équipement cryptographique comprend une interface physique externe supplémentaire reliée au module rouge et destinée à transmettre et à recevoir des informations sensibles, sans transit par le dispositif de gestion ;
- le module rouge comporte un élément du groupe consistant en : un dispositif de codage sonore, un dispositif de restitution sonore, un dispositif d'annulation d'écho, un dispositif de contrôle de gain audio, un dispositif de détection et de correction d'erreurs, un convertisseur analogique-numérique, un convertisseur numérique-analogique, un dispositif de classification de paquets de données, un dispositif de routage de données, et un dispositif de filtrage de données ;
- le module noir comporte un élément du groupe consistant en : un dispositif de codage sonore, un dispositif de restitution sonore, un convertisseur analogique-numérique, un modulateur/démodulateur, un dispositif de détection et de correction d'erreurs de transmission, un convertisseur numérique-analogique, un émetteur/récepteur électrique, radiofréquence ou optique, un amplificateur de puissance électrique, radiofréquence ou optique, un dispositif de routage de données, un dispositif de filtrage de données, et un dispositif de classification de paquets de données ;
- l'interface de sortie est un élément du groupe consistant en : une interface audio, une interface radiofréquence, une interface électrique filaire, et une interface optique ;
- l'équipement cryptographique est un élément du groupe consistant en : un poste de radio, un chiffreur réseau, un chiffreur d'artère, un combiné audio chiffrant, et un terminal chiffrant ;
- le dispositif de gestion comporte au moins un des éléments du groupe consistant en : un composant électromécanique, un composant électronique discret, un circuit logique programmable, et un circuit intégré.

La présente invention concerne aussi un équipement cryptographique selon la revendication 1.

Suivant d'autres modes de réalisation, l'équipement cryptographique comprend une ou plusieurs des caractéristiques des revendications 2 à 10, prises isolément ou suivant toutes les combinaisons techniquement possibles.

L'invention sera mieux comprise à la lecture de la description qui va suivre, donnée uniquement à titre d'exemple et faite en se référant aux dessins annexés, sur lesquels :
- la figure 1 est une représentation schématique d'un équipement cryptographique selon l'invention,
- la figure 2 est une représentation schématique d'un dispositif de gestion du mode clair selon l'invention,
- la figure 3 est une représentation schématique d'un poste de radio tactique suivant un premier mode de fonctionnement selon l'invention, et
- la figure 4 est une représentation schématique d'un poste de radio tactique suivant un second mode de fonctionnement selon l'invention.

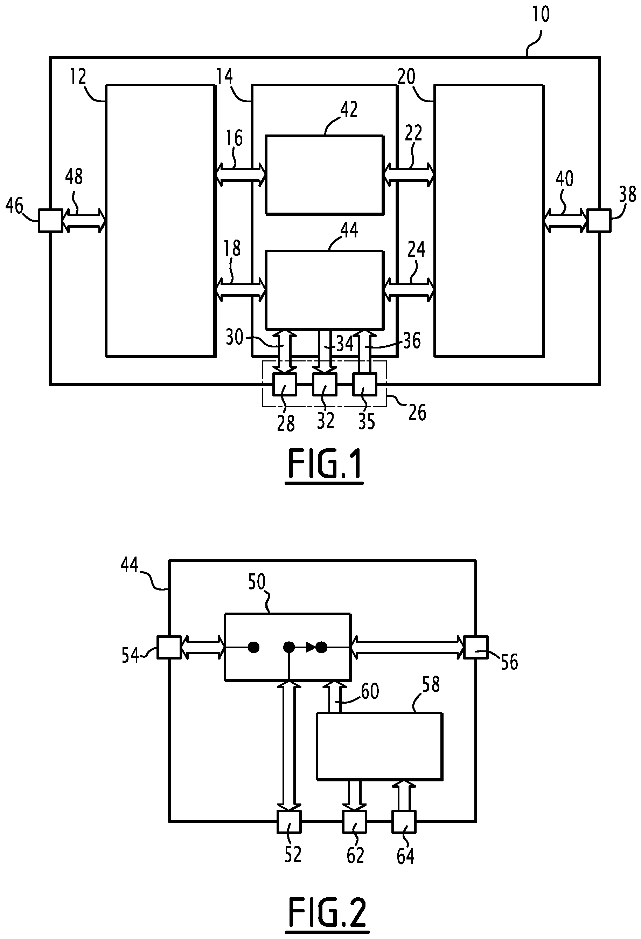

L'équipement cryptographique 10 selon l'invention, illustré sur la figure 1, constitue dans l'exemple considéré un poste de radio tactique propre à émettre et recevoir suivant deux modes de fonctionnement, à savoir un mode «chiffre» et un mode «clair» suivant que les informations transmises soient protégées ou non en confidentialité. Cet équipement se caractérise par une architecture de sécurité divisée en trois modules. Un module rouge 12, appelé également domaine hôte rouge, est relié à un module cryptographique 14, appelé également domaine cryptographique, au travers de deux liens amont 16, 18. Un module noir 20, appelé également domaine hôte noir, est connecté au module cryptographique 14 par l'intermédiaire de deux liens internes avales 22, 24.

Le module rouge 12 est propre à traiter des informations sensibles en clair.

Le module noir 20 est propre à traiter seulement des informations non-sensibles, c'est-à-dire sans compromission de sécurité en cas de divulgation. Ces informations sont soit des informations en clair, intrinsèquement non-sensibles, soit des informations chiffrées, intrinsèquement sensibles mais rendues non-sensibles par chiffrement.

Le module cryptographique 14 est propre à assurer la désensibilisation, respectivement la sensibilisation, des informations transitant du module rouge vers le module noir, respectivement du module noir vers le module rouge. A cet effet, il met en oeuvre des algorithmes et des clés cryptographiques pour chiffrer et déchiffrer ces informations.

L'équipement cryptographique 10 comprend une interface d'entrée 26, bidirectionnelle, reliée au module cryptographique 14.

Par exemple, comme illustré sur la figure 1, l'interface d'entrée 26 comporte une interface physique externe 28 reliée au module cryptographique 14 par un lien d'interface 30. L'interface externe 28 est destinée à transmettre des informations vers l'équipement cryptographique 10 et à recevoir des informations de l'équipement cryptographique 10.

L'interface 26 comprend également un indicateur 32 sonore ou visuel, comme par exemple un témoin lumineux à plusieurs couleurs, destiné à indiquer le mode de fonctionnement courant et relié au module cryptographique 14 au travers d'un lien d'interface 34. Elle comprend enfin un moyen de sélection 35 propre à choisir le mode de fonctionnement souhaité, c'est-à-dire soit le mode « clair », soit le mode « chiffre ». Ce dernier est connecté au module cryptographique 14 par l'intermédiaire d'un lien d'interface 36.

En outre, l'équipement cryptographique 10 comprend une interface de sortie 38, bidirectionnelle, reliée au module noir 20 au travers d'un lien d'interface 40. Cette interface est destinée à l'échange d'informations non-sensibles entre l'équipement cryptographique 10 et l'environnement extérieur, par exemple un réseau.

Le module cryptographique 14 comporte deux dispositifs autonomes et distincts, physiquement et logiquement :
- un bloc cryptographique 42 destiné à traiter les informations sensibles à l'aide de fonctions cryptographiques, et
- un dispositif de gestion du mode clair 44, propre à aiguiller les informations dans les deux sens entre l'interface d'entrée 26 et l'un des deux modules noir ou rouge 12, 20 suivant le mode de fonctionnement choisi.

Plus précisément, le bloc cryptographique 42 est propre à interagir, d'une part, avec le module rouge 12 au travers du lien interne amont 16 et, d'autre part, avec le module noir 20 au travers du lien interne aval 22.

De la même manière, le dispositif de gestion du mode clair 44 est propre à interagir, d'une part, avec le module rouge 12 au travers du lien interne amont 18 et, d'autre part, avec le module noir 20 au travers du lien interne aval 24.

En outre, le dispositif de gestion du mode clair 44 est propre à interagir avec l'interface d'entrée 26 au travers d'au moins un lien d'interface, par exemple au travers des liens d'interface 30, 34 et 36.

Le bloc 42 et le dispositif 44 disposent de ressources matérielles propres, distinctes l'une de l'autre. Par exemple, ils disposent d'une alimentation électrique spécifique qui leur est entièrement dédiée, ainsi que des circuits de traitement propres.

L'équipement cryptographique 10 répond à des normes et des recommandations de sécurité.

En particulier, les recommandations de sécurité en vigueur sur l'architecture des équipements cryptographiques préconisent un cloisonnement des fonctions cryptographiques du module cryptographique 14 dans le but d'obtenir un bloc cryptographique 42 autonome ainsi qu'une séparation entre le module rouge 12 et le module noir 20.

Afin d'obtenir un agrément qui autorise le déploiement de l'équipement cryptographique 10 dans une infrastructure cliente, une évaluation de sécurité est menée pour vérifier la conformité de l'équipement cryptographique 10 par rapport aux recommandations de sécurité susmentionnées.

Ainsi, pour répondre aux exigences des recommandations, le module cryptographique 14 implémente des mécanismes de protection physique communs au bloc 42 et au dispositif 44, caractérisés par un niveau de protection donné, permettant de protéger en intégrité le bloc cryptographique 42 et le dispositif de gestion 44.

Par exemple, le module 14 comporte un boîtier constitué d'un châssis et d'un capot. Une étiquette holographique est utilisée pour sceller le châssis et le capot. Ainsi, toute tentative d'accès aux composants internes du module 14 est détectée.

Les modules rouge 12 et noir 20 disposent également d'un niveau de protection physique donné, celui-ci étant inférieur au niveau de protection du module cryptographique 14.

Selon un mode de réalisation préféré, l'équipement cryptographique 10 comporte une interface physique externe supplémentaire 46 reliée au module rouge 12 au travers d'un lien d'interface 48. Cette interface 46 véhicule des informations sensibles entre l'équipement cryptographique 10 et l'environnement extérieur, comme par exemple un réseau.

La figure 2 représente un schéma du dispositif de gestion du mode clair 44 selon un mode de réalisation de l'invention.

Le dispositif de gestion du mode clair 44 comporte un dispositif d'aiguillage 50, comme par exemple un commutateur bidirectionnel à une entrée et deux sorties. Ce commutateur est propre à relier l'interface physique externe 28 via un port 52, soit au module rouge 12 au travers d'un port interne amont 54, soit au module noir 20 au travers d'un port interne aval 56, de manière exclusive.

Le dispositif de gestion du mode clair 44 comprend, en outre, un moyen de contrôle 58 du dispositif d'aiguillage 50, relié au dispositif 50 au travers d'un lien de commande 60 et destiné à commander le dispositif 50.

Le moyen de contrôle 58 est également relié, d'une part, à l'indicateur 32 au travers d'un port d'interface 62 et, d'autre part, au sélecteur 35 au travers d'un port d'interface 64.

Le module rouge 12, également appelé domaine rouge, contient toutes les fonctions et interfaces qui traitent les données à l'état non chiffré, c'est-à-dire en clair. Les fonctions du module rouge 12 effectuent des traitements sur les données non chiffrées avant leur transfert vers les fonctions cryptographiques du module cryptographique 14.

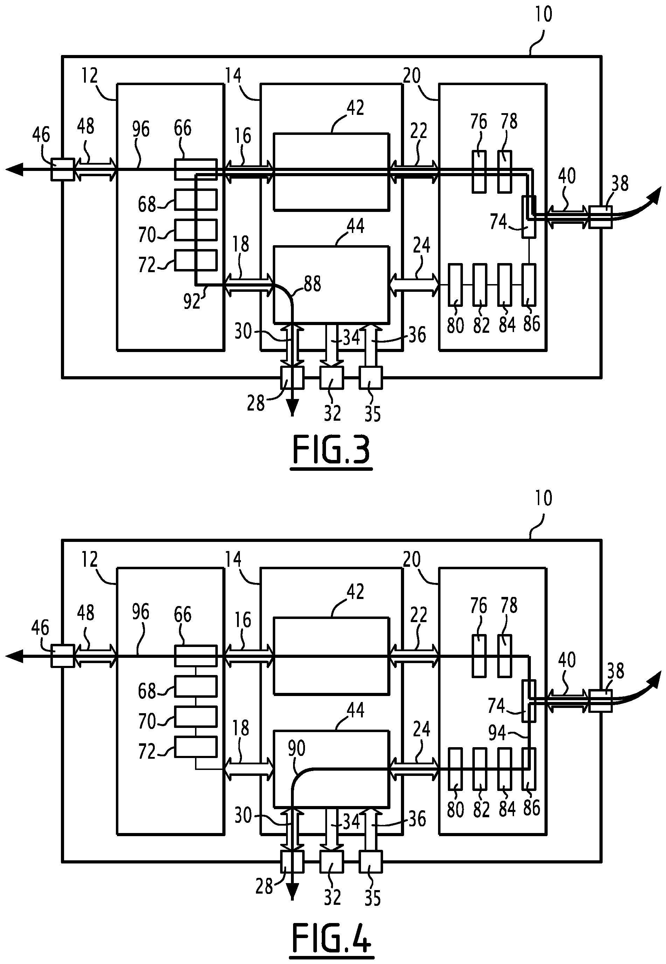

Plus précisément, en prenant l'exemple d'un poste radio, comme illustré sur la figure 3, le module rouge 12 comporte un dispositif de filtrage/routage 66 connecté, d'une part, au lien d'interface 48 et, d'autre part, au lien interne amont 16. Le dispositif de filtrage/routage 66 est également relié indirectement au lien interne amont 18 au travers d'un adaptateur 68, d'un dispositif de codage sonore 70 et d'un convertisseur analogique-numérique 72, reliés successivement en série.

Le module noir 20, également appelé domaine noir, contient toutes les fonctions et interfaces qui traitent les données à l'état chiffré lorsqu'elles proviennent du bloc cryptographique 42, et à l'état clair lorsqu'elles proviennent du dispositif de gestion du mode clair 44 sans transiter par le module rouge 12. Les fonctions du module noir 20 effectuent des traitements sur les données avant leur transmission vers l'interface de sortie 38.

Plus précisément, le module noir 20 comprend deux chaînes indépendantes de traitement de l'information entre, d'une part, le lien interne aval 22 et une première connexion interne à un adaptateur Radiofréquence 74 et, d'autre part, le lien interne aval 24 et une seconde connexion interne de l'adaptateur Radiofréquence 74. Par ailleurs, l'adaptateur Radiofréquence 74 est également relié au travers d'une troisième connexion au lien d'interface 40.

La première chaîne de traitement de l'information, destinée au traitement des informations sensibles, comprend un convertisseur numérique-analogique 76 connecté en entrée au lien interne aval 22 et, en sortie, à l'entrée d'un modulateur/démodulateur 78. Ce dernier est également relié en sortie à la première connexion interne de l'adaptateur Radiofréquence 74.

La seconde chaîne de traitement de l'information, destinée au traitement des informations non-sensibles, comprend un convertisseur analogique-numérique 80, identique au convertisseur analogique-numérique 72, un dispositif de codage sonore 82, identique au dispositif de codage sonore 70, un convertisseur numérique-analogique 84 et un modulateur-démodulateur 86 reliés successivement en série. De plus, le convertisseur analogique-numérique 80 est connecté en entrée au lien interne aval 24, le modulateur-démodulateur 86 étant relié en sortie à la seconde connexion interne de l'adaptateur Radiofréquence 74.

Le fonctionnement de l'équipement cryptographique 10, tel que représenté sur la figure 1, va être à présent décrit.

L'équipement cryptographique 10 comprend deux modes de fonctionnement exclusifs permettant un échange d'informations bidirectionnel entre l'interface d'entrée 26 et l'interface de sortie 38 : un premier mode, ou mode «chiffre», permettant le traitement des données sensibles de manière sécurisée, et un second mode, ou mode «clair», permettant le traitement des données non sensibles.

Les figures 3 et 4 illustrent le fonctionnement d'un exemple d'équipement cryptographique 10, par exemple un poste de radio tactique, suivant le mode de fonctionnement choisi. Dans cet exemple, le poste radio comprend un combiné audio raccordé à l'interface physique externe 28, correspondant ainsi à un port audio du poste radio.

Lorsque l'utilisateur sélectionne un mode de fonctionnement « clair » ou « chiffre » grâce au moyen de sélection 35, une consigne de sélection est envoyée sur le lien 36 vers le moyen de contrôle 58 via le port d'interface 64, comme illustré sur la figure 2. Après réception de la consigne de sélection, le moyen de contrôle 58 envoie un signal de commande sur le lien de commande 60 vers le dispositif d'aiguillage 50, afin de réaliser la liaison correspondant au mode de fonctionnement choisi.

Plus précisément, suivant le signal de commande reçu, le dispositif d'aiguillage 50 réalise une connexion interne 88 ou 90 afin de relier le port d'interface 52, soit au port interne 54, soit au port interne 56.

Dans le premier cas, la connexion interne 88 réalise à une connexion de bout en bout 92 visible sur la figure 3. Dans le second cas, la connexion interne 90 réalise à une connexion de bout en bout 94 visible sur la figure 4.

Une fois la connexion établie, le moyen de contrôle 58 envoie un signal d'information vers l'indicateur 32 via le port d'interface 62, afin d'alimenter l'indicateur 32 en fonction de la connexion réalisée et donc du mode de fonctionnement courant.

Ainsi, pour choisir le mode « chiffre », illustré sur la figure 3, l'utilisateur sélectionne la position correspondante sur le moyen de sélection 35 qui envoie alors une consigne de sélection sur le lien d'interface 36 à destination du dispositif de gestion du mode clair 44.

Sur réception de cette consigne, le dispositif de gestion du mode clair 44 commande la connexion interne 88 entre l'interface physique externe 28 et le module rouge 12, reliant ainsi le lien interne 18 au lien d'interface 30. Une fois la connexion 88 établie, un signal d'information spécifique est envoyé par le dispositif de gestion du mode clair 44 sur le lien d'interface 34 vers l'indicateur 32, afin de déclencher son alimentation en correspondance avec le mode «chiffre». A titre d'exemple, en utilisant un voyant lumineux à plusieurs couleurs, la couleur rouge s'allume.

Dès lors, toutes les données sensibles transmises sur l'interface physique externe 28 sont redirigées exclusivement vers le module rouge 12.

Par exemple, dans le cas d'une communication sécurisée de phonie, la voix est alors convertie sous la forme d'un flux de données à l'aide du convertisseur analogique-numérique 72. Ce flux est ensuite vocodé par le dispositif de codage sonore 70. Les données transitent ensuite par l'adaptateur 68 qui effectue une conversion du signal correspondant avant que les données ne soient transmises vers le dispositif de filtrage/routage 66. Celui-ci réalise alors le transfert des données audio vers le bloc cryptographique 42 au travers du lien interne amont 16.

Le flux audio numérisé et vocodé est envoyé vers le module cryptographique 14 pour chiffrement. Il est alors chiffré par les fonctions cryptographiques du bloc cryptographique 42 puis transmis sur le lien 22 vers le module noir 20, ou domaine noir.

Les données reçues par le module noir 20 sont converties sous forme analogique à l'aide du convertisseur numérique-analogique 76 de la première chaîne de traitement de l'information puis transférées vers le modulateur/démodulateur 78 associé qui effectue une modulation du signal correspondant. Les données sont ensuite transmises à l'adaptateur Radiofréquence 74 qui réalise les opérations de filtrage et d'amplification du signal avant que les données ne soient transmises sur le lien 40 vers l'interface de sortie 38, correspondant par exemple à une interface antenne.

Inversement, les données audio transitant de l'interface de sortie 38 vers l'interface physique externe 28 suivent un cheminement identique jusqu'au lien interne amont 16. Ensuite, les données audio sont filtrées puis aiguillées par le dispositif de filtrage/routage 66 du module rouge 12 vers le lien interne amont 18 à destination du dispositif de gestion du mode clair 44 après avoir traversées respectivement l'adaptateur 68, le dispositif de codage sonore 70 et le convertisseur analogique-numérique 72 du module 12.

Ainsi, en mode «chiffre», la connexion bidirectionnelle de bout en bout 92 est établie entre l'interface physique externe 28 et l'interface de sortie 38, afin d'offrir un service de communication sécurisé de phonie.

En outre, les données sensibles transmises sur l'interface physique externe supplémentaire 46 au travers du lien 48 sont envoyées directement et uniquement vers le dispositif de filtrage/routage 66 du module rouge 12 puis transmises sur le lien interne amont 16 vers le bloc cryptographique 42.

Ensuite, les données sensibles suivent un cheminement identique aux données audio. En effet, après chiffrement, le bloc cryptographique 42 effectue un envoi des données chiffrées au travers du lien interne aval 22 vers le module noir 20.

Puis, après réalisation au sein du module 20 des opérations de conversion par le convertisseur numérique-analogique 76 et de modulation réalisées par le modulateur/démodulateur 78, le signal sous forme d'onde sécurisée, associé aux données, est transmis vers l'adaptateur Radiofréquence 74. Ensuite, ce signal est transmis sur le lien d'interface 40 vers l'interface de sortie 38.

En sens inverse, le signal Radiofréquence, contenant des données sécurisées reçues de l'interface de sortie 38, est aiguillé vers le lien interne aval 22, grâce à l'utilisation d'un filtre spécifique pour la forme d'onde sécurisée au sein de l'adaptateur Radiofréquence 74, après avoir été transformé par le démodulateur 78 et le convertisseur numérique-analogique 76.

Ensuite, à l'issue du traitement cryptographique, les données sont émises sur le lien interne amont 16 vers le dispositif de filtrage/routage 66 du module rouge 12 qui va permettre d'aiguiller les données vers l'interface physique externe supplémentaire 46.

Dès lors, une connexion bidirectionnelle 96, différente de la connexion 92, est réalisée entre l'interface physique externe supplémentaire 46 et l'interface de sortie 38, afin d'offrir un service de communication sécurisé de données.

Par conséquent, toutes les informations sensibles transitent obligatoirement par le bloc cryptographique 42 et bénéficient donc d'un traitement cryptographique, comme par exemple des opérations de chiffrement quand les informations transitent du module 12 vers le module 20 et de déchiffrement en sens inverse, assurant ainsi la sécurisation des informations.

Ainsi, en mode «chiffre», le poste radio offre deux services de communication disponibles en parallèle : un service de communication sécurisé de données, et un service de communication sécurisé de phonie.

Le second mode de fonctionnement ou mode «clair» de l'équipement cryptographique 10 est illustré sur la figure 4.

Suivant le même principe que décrit précédemment, dès que la sélection du mode «clair» est choisie par l'utilisateur sur le moyen de sélection 35, une consigne de sélection est envoyée au dispositif de gestion du mode clair 44.

Sur réception de cette consigne, le dispositif de gestion du mode clair 44 établit une connexion 90, différente de la connexion 88, entre l'interface physique externe 28 et le module noir 20, reliant ainsi le lien interne 24 au lien d'interface 30. Après l'établissement de la connexion 90, le dispositif de gestion du mode clair 44 envoie un signal d'information spécifique vers l'indicateur 32, comme par exemple vers le voyant lumineux à plusieurs couleurs, déclenchant ainsi l'allumage du voyant en une couleur correspondant au mode «clair», par exemple le vert.

Dès lors, toutes les informations non sensibles transmises sur l'interface physique externe 28 sont aiguillées uniquement vers le module noir 20, sans transiter par le module rouge 12, puis transmises directement vers l'interface de sortie 38.

Il en va de même en sens inverse de l'interface de sortie 38 vers l'interface physique externe 28.

De manière plus précise, en prenant l'exemple du poste radio comprenant un combiné audio raccordé à l'interface physique externe 28, les données vocales issues du combiné audio de nature analogique sont transmises sur l'interface physique externe 28 vers le dispositif de gestion 44.

Les informations sont ensuite aiguillées par le dispositif de gestion 44 vers le module noir 20 qui effectue une adaptation des informations reçues en clair afin de permettre leur transmission vers l'environnement extérieur via l'interface de sortie 38.

Plus précisément, au sein du module noir 20, les données audio transmises sur le lien 24 sont converties au sein de la seconde chaîne de traitement de l'information sous la forme d'un signal numérique à l'aide du convertisseur analogique-numérique 80. Puis, le dispositif de codage sonore 82 effectue une compression du signal qui est ensuite reconverti en un format analogique sous une forme d'onde claire par le convertisseur numérique-analogique 84. Ensuite, un modulateur/démodulateur 86 effectue l'opération de modulation puis l'adaptateur Radiofréquence 74 adapte alors le signal en un signal Radiofréquence propre à être transmis à l'interface de sortie 38.

Inversement, le signal Radiofréquence contenant des données non chiffrées reçues de l'interface antenne est aiguillé vers le lien 24 par le module noir 20. Cet aiguillage s'effectue grâce à l'utilisation d'un filtre spécifique au sein de l'adaptateur Radiofréquence 74 permettant de faire la distinction entre un signal de forme d'onde clair et un signal de forme d'onde sécurisé.

Ce signal subit ensuite, au sein de la seconde chaîne de traitement de l'information, les différents traitements de démodulation par le modulateur/démodulateur 86, de conversion analogique-numérique par le convertisseur numérique-analogique 84, de décompression par le dispositif de codage sonore 82 et de conversion numérique-analogique par le convertisseur analogique-numérique 80 afin d'être transmis au dispositif de gestion du mode clair 44.

Ainsi, en mode «clair», une connexion bidirectionnelle spécifique 94, différente de la connexion bidirectionnelle 92, est établie entre l'interface physique externe 28 et l'interface de sortie 38, permettant d'offrir un service de communication de phonie claire.

De plus, le mode «clair» est propre à offrir également un service de communication sécurisé de données grâce à l'établissement de la connexion bidirectionnelle 96 entre l'interface physique externe supplémentaire 46 et l'interface de sortie 38.

Ainsi, le cheminement des informations non sensibles en mode «clair» est différent du cheminement des informations sensibles en mode «chiffre», les informations non sensibles ne transitant pas par le bloc cryptographique 42.

Par conséquent, en mode «clair», le poste radio offre deux services de communication disponibles en parallèle : un service de communication sécurisé de données, et un service de communication de phonie claire.

Dès lors, le bloc cryptographique 42 et le dispositif de gestion du mode clair 44 étant physiquement distincts et autonomes, en cas de panne du bloc cryptographique 42, le service de communication clair de phonie demeure disponible puisque seuls le dispositif de gestion 44 et le module noir 20 sont nécessaires pour l'établissement d'une communication audio en clair.

De plus, en cas d'activation involontaire du mode «clair», l'équipement cryptographique 10 présente l'avantage d'éviter la transmission en clair de données sensibles reçues sur l'interface physique externe supplémentaire 46 au travers du bloc cryptographique 42 et de ne pas interrompre les services de sécurité offerts par l'équipement cryptographique 10.

Ainsi, compte tenu de l'indépendance fonctionnelle et physique du dispositif de gestion 44 par rapport au bloc cryptographique 42, l'activation du mode «clair» au niveau du dispositif de gestion 44 ne perturbe ni l'exécution ni la mise en oeuvre des fonctions cryptographiques de l'équipement cryptographique 10.

D'autre part, l'architecture et le fonctionnement particulier de l'équipement cryptographique 10 permettent de supprimer le besoin d'implémenter un canal de transmission en clair au niveau du bloc cryptographique 42.

Par conséquent, lors de l'activation du mode «clair», les opérations habituellement effectuées au niveau du bloc cryptographique 42, comme par exemple l'effacement sécurisé des informations sensibles ou la sauvegarde du contexte d'exécution des fonctions cryptographiques, ne sont plus nécessaires.

Ainsi, le passage en mode «clair» de l'équipement cryptographique 10 selon l'invention est quasiment instantané.

D'autres applications peuvent être envisagées pour l'équipement cryptographique, comme par exemple une utilisation en tant que chiffreur réseau, chiffreur d'artère, combiné audio chiffrant ou terminal chiffrant (téléphone chiffrant).

Bien entendu, d'autres modes de réalisation peuvent être envisagés en fonction des applications de l'équipement cryptographique.

Le module rouge peut comporter, par exemple, un des éléments suivants : un dispositif de codage sonore, un dispositif de restitution sonore, un dispositif d'annulation d'écho, un dispositif de contrôle de gain audio, un dispositif de détection et de correction d'erreurs, un convertisseur analogique-numérique, un convertisseur numérique-analogique, un dispositif de classification de paquets de données, un dispositif de routage de données et un dispositif de filtrage de données.

Le module noir peut comporter un des éléments suivants : dispositif de codage sonore, un dispositif de restitution sonore, un convertisseur analogique-numérique, un modulateur/démodulateur, un dispositif de détection et de correction d'erreurs de transmission, un convertisseur numérique-analogique, un émetteur/récepteur électrique, radiofréquence ou optique, un amplificateur de puissance électrique, radiofréquence ou optique, un dispositif de routage de données, un dispositif de filtrage de données, et un dispositif de classification de paquets de données.

L'interface de sortie peut être une interface audio, par exemple un haut-parleur, une interface radiofréquence, par exemple une antenne, une interface électrique filaire, par exemple une interface USB ou Ethernet, ou une interface optique, de type Ethernet par exemple.

Enfin, le dispositif de gestion peut comporter au moins un des éléments suivants : un composant électromécanique, un composant électronique discret, un circuit logique programmable, et un circuit intégré.

## Revendications

1. Equipement cryptographique (10) comprenant :
- une interface d'entrée (26), permettant d'interagir avec l'équipement cryptographique (10) et d'échanger des informations sensibles ou non-sensibles de manière séquentielle,
- un module rouge (12), destiné à traiter des informations sensibles,
- un module cryptographique (14), relié au module rouge (12) par un premier lien interne amont (16) et propre à appliquer des fonctions cryptographiques,
- un module noir (20), relié au module cryptographique (14) par un premier lien interne aval (22) et propre à traiter des informations non-sensibles, et
- une interface de sortie (38), reliée au module noir (20) par un premier lien d'interface (40) et destinée à gérer l'échange d'informations depuis l'équipement cryptographique (10),
le module cryptographique (14) comportant :
- un bloc cryptographique (42) interagissant d'une part avec le module rouge (12) au travers du premier lien interne amont (16), et d'autre part avec le module noir (20) au travers du premier lien interne aval (22) et propre à traiter les informations sensibles à l'aide des fonctions cryptographiques, et
- un dispositif de gestion (44), interagissant avec l'interface d'entrée (26) au travers d'au moins un second lien d'interface (30, 34, 36) et avec soit le module rouge (12) au travers d'un second lien interne amont (18), soit le module noir (20) au travers d'un second lien interne aval (24) à l'exclusion des deux simultanément, et propre à aiguiller les informations sensibles entre l'interface d'entrée (26) et le second lien interne amont (18), ou les informations non-sensibles entre l'interface d'entrée (26) et le second lien interne aval (24), sans que les informations non-sensibles ne transitent par le module rouge (12),
le bloc cryptographique (42) et le dispositif de gestion (44) étant physiquement et logiquement distincts l'un de l'autre et autonomes, le bloc cryptographique (42) et le dispositif de gestion (44) disposant de moyen de protection identiques, propres à protéger en intégrité le dispositif de gestion (44) afin de détecter toute tentative d'altération, et **caractérisé en ce que** l'équipement cryptographique (10) comprend une interface physique externe supplémentaire (46) reliée au module rouge (12) au travers d'un lien d'interface (48), l'interface d'entrée (26) étant propre à établir une première connexion bidirectionnelle sécurisée (92) pour l'échange d'informations avec l'interface de sortie (38), l'interface physique externe supplémentaire (46) étant propre à établir une deuxième connexion bidirectionnelle sécurisée (96) pour l'échange d'informations avec l'interface de sortie (38), la première et la deuxième connexion bidirectionnelle étant différentes et disponibles en parallèle.

2. Equipement cryptographique (10) selon la revendication 1, **caractérisé en ce que** le bloc cryptographique (42) et le dispositif de gestion (44) ont des ressources matérielles propres.

3. Equipement cryptographique (10) selon la revendication 1 ou 2, **caractérisé en ce que** le dispositif de gestion (44) comprend :
- un dispositif d'aiguillage (50) connecté à la fois au second lien interne amont (18), au second lien interne aval (24) et à au moins un second lien d'interface (30, 34, 36), le dispositif d'aiguillage (50) étant destiné à relier l'interface d'entrée (26) soit au module rouge (12), soit au module noir (20), à l'exclusion des deux simultanément, et
- un moyen de contrôle (58) du dispositif d'aiguillage connecté à la fois :
- au dispositif d'aiguillage (50) afin de commander la liaison à réaliser, et
- à l'interface d'entrée (26), afin d'une part de recevoir une consigne de sélection de la liaison à réaliser suivant un mode de fonctionnement choisi et, d'autre part, d'informer l'utilisateur du mode de fonctionnement courant.

4. Equipement cryptographique (10) selon la revendication 3, **caractérisé en ce que** l'interface d'entrée (26) comprend:
- une interface physique externe (28) reliée au dispositif d'aiguillage (50) et destinée à transmettre les informations sensibles ou non-sensibles vers l'équipement cryptographique (10) et à recevoir les informations sensibles ou non-sensibles de l'équipement cryptographique (10),
- un indicateur (32) relié au moyen de contrôle (58) du dispositif d'aiguillage et destiné à indiquer le mode de fonctionnement courant, et
- un moyen de sélection (35) relié au moyen de contrôle (58) du dispositif d'aiguillage et destiné à fournir la consigne de sélection du mode de fonctionnement choisi.

5. Equipement cryptographique (10) selon l'une quelconque des revendications précédentes, **caractérisé en ce que** l'équipement cryptographique (10) comprend une interface physique externe supplémentaire (46) reliée au module rouge (12) et destinée à transmettre et à recevoir des informations sensibles, sans transit par le dispositif de gestion (44).

6. Equipement cryptographique (10) selon l'une quelconque des revendications précédentes, **caractérisé en ce que** le module rouge (12) comporte un élément du groupe consistant en : un dispositif de codage sonore, un dispositif de restitution sonore, un dispositif d'annulation d'écho, un dispositif de contrôle de gain audio, un dispositif de détection et de correction d'erreurs, un convertisseur analogique-numérique, un convertisseur numérique-analogique, un dispositif de classification de paquets de données, un dispositif de routage de données, et un dispositif de filtrage de données.

7. Equipement cryptographique (10) selon l'une quelconque des revendications précédentes, **caractérisé en ce que** le module noir (20) comporte un élément du groupe consistant en : un dispositif de codage sonore, un dispositif de restitution sonore, un convertisseur analogique-numérique, un modulateur/démodulateur, un dispositif de détection et de correction d'erreurs de transmission, un convertisseur numérique-analogique, un émetteur/récepteur électrique, radiofréquence ou optique, un amplificateur de puissance électrique, radiofréquence ou optique, un dispositif de routage de données, un dispositif de filtrage de données, et un dispositif de classification de paquets de données.

8. Equipement cryptographique (10) selon l'une quelconque des revendications précédentes, **caractérisé en ce que** l'interface de sortie (38) est un élément du groupe consistant en : une interface audio, une interface radiofréquence, une interface électrique filaire, et une interface optique.

9. Equipement cryptographique (10) selon l'une quelconque des revendications précédentes, **caractérisé en ce que** l'équipement cryptographique (10) est un élément du groupe consistant en : un poste de radio, un chiffreur réseau, un chiffreur d'artère, un combiné audio chiffrant, et un terminal chiffrant.

10. Equipement cryptographique (10) selon l'une quelconque des revendications précédentes, **caractérisé en ce que** le dispositif de gestion (44) comporte au moins un des éléments du groupe consistant en : un composant électromécanique, un composant électronique discret, un circuit logique programmable, et un circuit intégré.

## Patentansprüche

1. Kryptographie-Einrichtung (10), aufweisend:
- eine Eingabeschnittstelle (26), die ein Interagieren mit der Kryptographie-Einrichtung (10) und ein Austauschen von sensiblen oder nichtsensiblen Informationen auf sequentielle Weise ermöglicht,
- ein rotes Modul (12), das zum Verarbeiten von sensiblen Informationen vorgesehen ist,
- ein Kryptographie-Modul (14), das mit dem roten Modul (12) über eine erste vorgeschaltete interne Verbindung (16) verbunden ist und zum Anwenden von kryptographischen Funktionen geeignet ist,
- ein schwarzes Modul (20), das mit dem Kryptographie-Modul (14) durch eine erste nachgeschaltete interne Verbindung (22) verbunden ist und geeignet ist, nichtsensible Informationen zu verarbeiten, und
- eine Ausgangsschnittstelle (38), die über eine erste Schnittstellenverbindung (40) mit dem schwarzen Modul (20) verbunden und vorgesehen ist, um den Austausch von Informationen von der Kryptographie-Einrichtung (10) zu verwalten,
wobei das Kryptographie-Modul (14) aufweist:
- einen Kryptographie-Block (42), der einerseits über die erste vorgeschaltete interne Verbindung (16) mit dem roten Modul (12) und andererseits über die erste nachgeschaltete interne Verbindung (22) mit dem schwarzen Modul (20) interagiert und geeignet ist, die sensiblen Informationen mit Hilfe der kryptographischen Funktionen zu verarbeiten, und
- eine Verwaltungsvorrichtung (44), die mit der Eingabeschnittstelle (26) über mindestens eine zweite Schnittstellenverbindung (30, 34, 36) und entweder mit dem roten Modul (12) über eine zweite vorgeschaltete interne Verbindung (18) oder mit dem schwarzen Modul (20) über eine zweite nachgeschaltete interne Verbindung (24) interagiert, wobei beide gleichzeitig ausgeschlossen sind, und geeignet ist, die sensiblen Informationen zwischen der Eingangsschnittstelle (26) und der zweiten vorgeschalteten internen Verbindung (18) oder die nichtsensiblen Informationen zwischen der Eingangsschnittstelle (26) und der zweiten nachgeschalteten internen Verbindung (24) zu leiten, ohne dass die nichtsensiblen Informationen das rote Modul (12) durchlaufen,
wobei der Kryptographie-Block (42) und die Verwaltungsvorrichtung (44) physikalisch und logisch voneinander verschieden und autonom sind,
wobei der Kryptographie-Block (42) und die Verwaltungsvorrichtung (44) mit identische Schutzmitteln ausgestattet sind, die in der Lage sind, die Integrität der Verwaltungsvorrichtung (44) zu schützen, um jeden Manipulationsversuch zu detektieren,
und **dadurch gekennzeichnet, dass** die Kryptographie-Einrichtung (10) eine zusätzliche externe physikalische Schnittstelle (46) aufweist, die über eine Schnittstellenverbindung (48) mit dem roten Modul (12) verbunden ist, wobei die Eingangsschnittstelle (26) geeignet ist, eine erste sichere bidirektionale Verbindung (92) für den Informationsaustausch mit der Ausgangsschnittstelle (38) herzustellen, wobei die zusätzliche externe physikalische Schnittstelle (46) geeignet ist, eine zweite sichere bidirektionale Verbindung (92) für den Informationsaustausch mit der Ausgangsschnittstelle (38) herzustellen, wobei die erste und die zweite bidirektionale Verbindung unterschiedlich und parallel verfügbar sind.

2. Kryptographie-Einrichtung (10) gemäß Anspruch 1, **dadurch gekennzeichnet, dass** der Kryptographie-Block (42) und die Verwaltungsvorrichtung (44) eigene Hardware-Ressourcen aufweisen.

3. Kryptographie-Einrichtung (10) gemäß Anspruch 1 oder 2, **dadurch gekennzeichnet, dass** die Verwaltungsvorrichtung (44) aufweist:
- eine Schaltvorrichtung (50), die gleichzeitig mit der zweiten vorgeschalteten internen Verbindung (18), mit der zweiten nachgeschalteten internen Verbindung (24) und mit mindestens einer zweiten Schnittstellenverbindung (30, 34, 36) verbunden ist, wobei die Schaltvorrichtung (50) vorgesehen ist, um die Eingangsschnittstelle (26) entweder mit dem roten Modul (12) oder mit dem schwarzen Modul (20) zu verbinden, wobei beide gleichzeitig ausgeschlossen sind, und
- ein Steuermittel (58) der Schaltvorrichtung, das gleichzeitig verbunden ist mit:
- der Schaltvorrichtung (50), um die herzustellende Verbindung zu steuern, und
- mit der Eingabeschnittstelle (26), um einerseits eine Anweisung zum Auswählen der zu realisierenden Verbindung gemäß einem gewählten Funktionsmodus zu erhalten und andererseits den Benutzer über den aktuellen Funktionsmodus zu informieren.

4. Kryptographie-Einrichtung (10) gemäß Anspruch 3, **dadurch gekennzeichnet, dass** die Eingabeschnittstelle (26) aufweist:
- eine externe physikalische Schnittstelle (28), die mit der Schaltvorrichtung (50) verbunden ist und vorgesehen ist, um die sensiblen oder nichtsensiblen Informationen an die Kryptographie-Einrichtung (10) zu senden und die sensiblen oder nichtsensiblen Informationen von der Kryptographie-Einrichtung (10) zu empfangen,
- eine Anzeige (32), die mit dem Steuermittel (58) der Schaltvorrichtung verbunden ist und vorgesehen ist, um den aktuellen Funktionsmodus anzuzeigen, und
- ein Auswahlmittel (35), das mit dem Steuermittel (58) der Schaltvorrichtung verbunden ist und vorgesehen ist, um die Anweisung zum Auswählen des gewählten Funktionsmodus bereitzustellen.

5. Kryptographie-Einrichtung (10) gemäß irgendeinem der vorhergehenden Ansprüche, **dadurch gekennzeichnet, dass** die Kryptographie-Einrichtung (10) eine zusätzliche externe physikalische Schnittstelle (46) aufweist, die mit dem roten Modul (12) verbunden ist und vorgesehen ist, um sensible Informationen ohne Transit durch die Verwaltungsvorrichtung (44) zu senden und zu empfangen.

6. Kryptographie-Einrichtung (10) gemäß irgendeinem der vorhergehenden Ansprüche, **dadurch gekennzeichnet, dass** das rote Modul (12) ein Element der Gruppe aufweist, die aus einer Toncodierungsvorrichtung, einer Tonwiedergabevorrichtung, einer Echokompensationsvorrichtung, einer Audioverstärkungssteuervorrichtung, einer Fehlerdetektions- und -korrekturvorrichtung, einem Analog-Digital-Wandler, einem Digital-Analog-Wandler, einer Datenpaketklassifizierungsvorrichtung, einer Datenweiterleitungsvorrichtung und einer Datenfiltervorrichtung besteht.

7. Kryptographie-Einrichtung (10) gemäß irgendeinem der vorhergehenden Ansprüche, **dadurch gekennzeichnet, dass** das schwarze Modul (20) ein Element der Gruppe aufweist, die aus einer Toncodierungsvorrichtung, einer Tonwiedergabevorrichtung, einem Analog-Digital-Wandler, einem Modulator/Demodulator, einer Übertragungsfehlerdetektions-und -korrekturvorrichtung, einem Digital-Analog-Wandler, einem elektrischen, Radiofrequenz- oder optischen Sender/Empfänger, einem elektrischen, Radiofrequenz- oder optischen Leistungsverstärker, einer Datenweiterleitungsvorrichtung, einer Datenfiltervorrichtung und einer Datenpaketklassifizierungsvorrichtung besteht.

8. Kryptographie-Einrichtung (10) gemäß irgendeinem der vorhergehenden Ansprüche, **dadurch gekennzeichnet, dass** die Ausgangsschnittstelle (38) ein Element der Gruppe ist, die aus einer Audioschnittstelle, einer Radiofrequenzschnittstelle, einer verdrahteten elektrischen Schnittstelle und einer optischen Schnittstelle besteht.

9. Kryptographie-Einrichtung (10) gemäß irgendeinem der vorhergehenden Ansprüche, **dadurch gekennzeichnet, dass** die Kryptographie-Einrichtung (10) ein Element der Gruppe ist, die aus einem Funkgerät, einer Netzwerkverschlüsselungseinrichtung, einer Leitungsverschlüsselungseinrichtung, einem verschlüsselnden Audio-Handapparat und einem verschlüsselnden Endgerät besteht.

10. Kryptographie-Einrichtung (10) gemäß irgendeinem der vorhergehenden Ansprüche, **dadurch gekennzeichnet, dass** die Verwaltungsvorrichtung (44) mindestens eines der Elemente der Gruppe aufweist, die aus einem elektromechanischen Bauteil, einem diskreten elektronischen Bauteil, einer programmierbaren Logikschaltung und einer integrierten Schaltung besteht.

## Claims

1. Cryptographic equipment (10), comprising:
- an input interface (26), allowing to interact with the cryptographic equipment (10) and share sensitive or non-sensitive information sequentially,
- a red module (12), intended to process sensitive information,
- a cryptographic module (14), connected to the red module (12) by a first upstream internal link (16) and adapted to apply cryptographic functions,
- a black module (20), connected to the cryptographic module (14) by a first downstream internal link (22) and adapted to process non-sensitive information, and
- an output interface (38), connected to the black module (20) by a first interface link (40) and intended to manage information sharing from the cryptographic equipment (10),
the cryptographic module (14) comprising:
- a cryptographic unit (42), which interacts with the red module (12) through the first upstream internal link (16), and with the black module (20) through the first downstream internal link (22), and adapted to process the sensitive information using the cryptographic functions, and
- a management device (44), which interacts with the input interface (26) through at least one second interface link (30, 34, 36) and with either the red module (12) through a second upstream internal link (18), or the black module (20) through a second downstream internal link (24), but not with both simultaneously, and adapted to orient the sensitive information between the input interface (26) and the second upstream internal link (18), or the non-sensitive information between the input interface (26) and the second downstream internal link (24), without the non-sensitive information passing through the red module (12),
the cryptographic unit (42) and the management device (44) being physically and logically separate from one another and independent,
the cryptographic bloc (42) and the management device (44) having identical protection means, capable of protecting the integrity of the management device (44) so as to detect any tampering attempt,
and **characterized in that** the cryptographic equipment (10) comprises an additional external physical interface (46) connected to the red module (12) through an interface link (48), the input interface (26) being able to establish a first secure bidirectional connection (92) for the exchange of information with the output interface (38), the additional external physical interface (46) being able to establish a second secure bidirectional connection (96) for exchanging information with the output interface (38), the first and the second bidirectional connection being different and available in parallel.

2. The cryptographic equipment (10) according to claim 1, **characterized in that** the cryptographic unit (42) and the management device (44) have separate physical resources.

3. The cryptographic equipment (10) according to claim 1 or 2, **characterized in that** the management device (44) comprises:
- an orienting device (50) simultaneously connected to the second upstream internal link (18), the second downstream internal link (24), and at least one second interface link (30, 34, 36), the orienting device (50) being intended to link the input interface (26) either to the red module (12) or to the black module (20), but not both simultaneously, and
- verification means (58) of the orienting device connected simultaneously to:
- the orienting device (50), so as to control the link to be made, and
- the input interface (26), so as on the one hand to receive a selection instruction for the link to be made according to a selected operating mode, and on the other hand to inform the user of the current operating mode.

4. The cryptographic equipment (10) according to claim 3, **characterized in that** the input interface (26) comprises:
- an external physical interface (28) connected to the orienting device (50) and intended to send the sensitive or non-sensitive information to the cryptographic equipment (10) and to receive the sensitive or non-sensitive information from the cryptographic equipment (10),
- an indicator (32) connected to the verification means (58) of the orienting device and intended to indicate the current operating mode, and
- selecting means (35) connected to the verification means (58) of the orienting device and intended to provide the selection instruction for the selected operating mode.

5. The cryptographic equipment (10) according to any one of the preceding claims, **characterized in that** the cryptographic equipment (10) comprises an additional external physical interface (46) connected to the red module (12) and intended to send and receive sensitive information, without passing through the management device (44).

6. The cryptographic equipment (10) according to any one of the preceding claims, **characterized in that** the red module (12) includes an element from the group consisting of: an audio encoding device, an audio retrieval device, an echo canceling device, an audio gain verification device, an error detection and correction device, an analog-digital converter, a digital-analog converter, a data packet classification device, a data routing device, and a data filtering device.

7. The cryptographic equipment (10) according to any one of the preceding claims, **characterized in that** the black module (20) includes an element from the group consisting of: an audio encoding device, an audio retrieval device, an analog-digital converter, a modulator/demodulator, a transmission error detection and correction device, a digital-analog converter, an electric, radiofrequency or optical emitter/receiver, an electrical, radiofrequency or optical power amplifier, a data routing device, a data filtering device, and a data packet classification device.

8. The cryptographic equipment (10) according to any one of the preceding claims, **characterized in that** the output interface (38) is an element from the group consisting of: an audio interface, a radiofrequency interface, a wired electrical interface, and an optical interface.

9. The cryptographic equipment (10) according to any one of the preceding claims, **characterized in that** the cryptographic equipment (10) is an element from the group consisting of: a radio set, a network encryptor, a feeder encryptor, an encrypting audio receiver, an encrypting terminal.

10. The cryptographic equipment (10) according to any one of the preceding claims, **characterized in that** the management device (44) includes at least one of the elements from the group consisting of: an electromagnetic component, a discrete electronic component, a programmable logic circuit, and an integrated circuit.
